# EUROPEAN PATENT APPLICATION

(11) **EP 3 406 310 A1**
(43) Date of publication of application: **28.11.2018**
(21) Application number: 18171398.3
(22) Date of filing: 09.05.2018
(51) Int. Cl.: A63F 13/355, A63F 13/67, H04N 21/442, H04N 21/2343

(54) **METHOD AND APPARATUSES FOR HANDLING VISUAL VIRTUAL REALITY CONTENT**

(30) Priority: 23.05.2017 GB 201708257
(71) Applicant: Nokia Technologies Oy, 02610 Espoo (FI)
(72) Inventor: MATE, Sujeet Shyamsundar, 33720 Tampere (FI); LEHTINIEMI, Arto, 33880 Lempäälä (FI); ERONEN, Antti, 33820 Tampere (FI); LEPPÄNEN, Jussi, 33580 Tampere (FI)
(74) Representative: Nokia EPO representatives

(57) **Abstract**

This application relates to causing receipt of visual virtual reality content comprising a first portion for display as a first region of virtual reality content and a second portion corresponding to a second region of virtual reality content, wherein the first portion has a first quality and the second portion has a second quality lower than the first quality, and causing generation of a third portion of visual virtual reality content for display as at least part of the second region of virtual reality content, wherein the third portion is generated by a neural network based on the first portion and/or the second portion.

## Description

### Field

This specification relates to the handling of visual virtual reality content.

### Background

In the field of immersive multimedia, it is often desirable to stream virtual reality content for consumption by a user. However, streaming of virtual reality content can be a bandwidth intensive process.

### Summary

According to a first aspect, this specification describes a method comprising: causing receipt of visual virtual reality content comprising a first portion for display as a first region of virtual reality content and a second portion corresponding to a second region of virtual reality content, wherein the first portion has a first quality and the second portion has a second quality lower than the first quality; and causing generation of a third portion of visual virtual reality content for display as at least part of the second region of virtual reality content, wherein the third portion is generated by a neural network based on the first portion and/or the second portion.

The third portion of virtual reality content may have a third quality higher than the second quality.

The method according to the first aspect may further comprise predicting a change in the viewing direction of a user, and the generation of the third portion may be based on the predicted change in viewing direction.

The method of the first aspect may further comprise: in response to detection of a change in the viewing direction of a user viewing the virtual reality content, causing display of the third portion of visual virtual reality content as the at least part of the second region of virtual reality content.

The method of the first aspect may further comprise: in response to a detection of a change in viewing direction of a user viewing the virtual reality content, requesting a fourth portion of visual virtual reality content for display as the at least part of the second region of virtual reality content, wherein the fourth portion has a fourth quality higher than the third quality.

The method of the first aspect may further comprise: receiving the fourth portion of visual virtual reality content; and in response to the receipt of the fourth portion, causing display of the fourth portion as the at least part of the second region of virtual reality content.

The fourth quality may be the same quality as the first quality.

The first region may neighbour the second region.

The quality of visual virtual reality content may comprise at least one of: resolution, bit depth, bit rate, and frame rate.

The size of the third portion may be determined based on one or more of the following: user feedback, a measure of the difference in quality between the first quality and the third quality, tile size, number of decoders.

The neural network may be a Generative Adversarial Network.

The Generative Adversarial Network may be trained based on the third portion of visual virtual reality content.

According to a second aspect, this specification describes apparatus configured to perform any method described with reference to the first aspect.

According to a third aspect, this specification describes computer readable instructions, which when executed by computing apparatus, causes the computing apparatus to perform any method described with reference to the first aspect.

According to a fourth aspect, this specification describes apparatus comprising at least one processor, and at least one memory including computer program code, which when executed by the at least one processor, causes the apparatus to: cause receipt of visual virtual reality content comprising a first portion for display as a first region of virtual reality content and a second portion corresponding to a second region of virtual reality content, wherein the first portion has a first quality and the second portion has a second quality lower than the first quality; and cause generation of a third portion of visual virtual reality content for display as at least part of the second region of virtual reality content, wherein the third portion is generated by a neural network based on the first portion and/or the second portion.

The third portion of virtual reality content may have a third quality higher than the second quality.

The computer program code, when executed by the at least one processor, may further cause the apparatus to predict a change in the viewing direction of a user, and the generation of the third portion may be based on the predicted change in viewing direction.

The computer program code, when executed by the at least one processor, may further cause the apparatus to: in response to detection of a change in the viewing direction of a user viewing the virtual reality content, cause display of the third portion of visual virtual reality content as the at least part of the second region of virtual reality content.

The computer program code, when executed by the at least one processor, may further cause the apparatus to: in response to a detection of a change in viewing direction of a user viewing the virtual reality content, request a fourth portion of visual virtual reality content for display as the at least part of the second region of virtual reality content, wherein the fourth portion has a fourth quality higher than the third quality.

The computer program code, when executed by the at least one processor, may further cause the apparatus to: receive the fourth portion of visual virtual reality content, and in response to the receipt of the fourth portion, cause display of the fourth portion as the at least part of the second region of virtual reality content.

The fourth quality may be the same quality as the first quality.

The first region may neighbour the second region.

The quality of visual virtual reality content may comprise at least one of: resolution, bit depth, bit rate, and frame rate.

The size of the third portion may be determined based on one or more of the following: user feedback, a measure of the difference in quality between the first quality and the third quality, tile size, number of decoders.

The neural network may be a Generative Adversarial Network.

The Generative Adversarial Network may be trained based on the third portion of visual virtual reality content.

According to a fifth aspect, this specification describes a computer-readable medium having computer-readable code stored thereon, the computer readable code, when executed by at least one processor, causes performance of: causing receipt of visual virtual reality content comprising a first portion for display as a first region of virtual reality content and a second portion corresponding to a second region of virtual reality content, wherein the first portion has a first quality and the second portion has a second quality lower than the first quality; and causing generation of a third portion of visual virtual reality content for display as at least part of the second region of virtual reality content, wherein the third portion is generated by a neural network based on the first portion and/or the second portion.

The computer-readable code stored on the medium of the fifth aspect may further cause performance of any of the operations described with reference to the method of the first aspect.

According to a sixth aspect, this specification describes apparatus comprising means for causing receipt of visual virtual reality content comprising a first portion for display as a first region of virtual reality content and a second portion corresponding to a second region of virtual reality content, wherein the first portion has a first quality and the second portion has a second quality lower than the first quality; and means for causing generation of a third portion of visual virtual reality content for display as at least part of the second region of virtual reality content, wherein the third portion is generated by a neural network based on the first portion and/or the second portion.

The apparatus of the sixth aspect may further comprise means for causing performance of any of the operations described with reference to the method of the first aspect.

### Brief Description of the Drawings

For a more complete understanding of the methods, apparatuses and computer-readable instructions described herein, reference is now made to the following descriptions taken in connection with the accompanying drawings, in which:
Figure 1 illustrates an example of a system for providing virtual reality content to a user;
Figures 2A to 2C illustrate examples of the delivery of visual VR content at various moments in time;
Figure 3 illustrates an example of a Generative Adversarial Network which may form part of a system such as that of Figure 1;
Figure 4 is a flowchart illustrating examples of various operations which may be performed by the system of Figure 1;
Figure 5 is a schematic diagram of an example configuration of control apparatus which may constitute one or more of the parts of the system of Figure 1;
Figure 6 illustrates an example of a computer-readable medium with computer-readable instructions stored thereon.

### Detailed Description

In the description and drawings, like reference numerals may refer to like elements throughout.

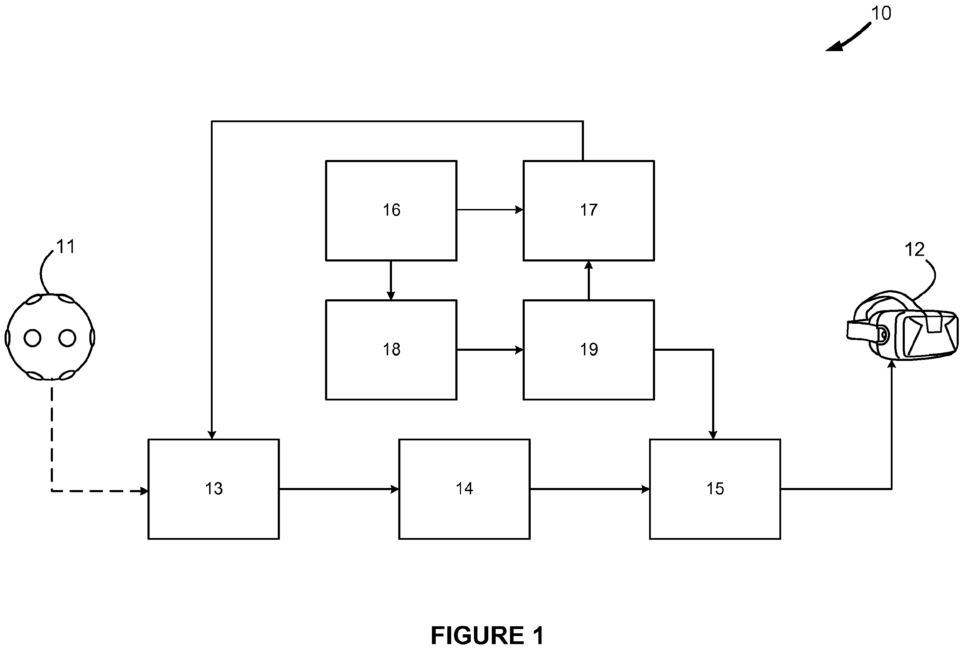

Figure 1 illustrates an example of a system 10 for providing at least visual virtual reality (VR) content to a user. In the context of this specification, visual virtual reality content refers to content which may provide a user with the experience of being immersed in a virtual or partially virtual environment. For example, the virtual environment may correspond to a real world environment, a computer generated environment, or a real world environment augmented with computer generated content (also known as "augmented reality" or "mixed reality").

The system 10 may comprise one or more content capture devices 11, a content consumption device 12, a streaming server 13, a buffer 14, a rendering module 15, a viewing direction tracking module 16, a signalling module 17, a prediction module 18 and a content generation module 19. In some examples, the system 10 may be implemented using an Omnidirectional Media Application Format (OMAF) architecture. In general, it will be appreciated that the functions described herein may be implemented using a client centric method, a server centric method, or using hybrid architecture. Each of the components of the system 10 will now be described in more detail below.

The one or more content capture devices 11 may be devices which are capable of capturing VR content by recording video and/or audio in an environment. In this way, VR content corresponding to the environment may be obtained by the one or more content capture devices 11. As illustrated in Figure 1, a content capture device 11 may be a multi-directional image capture apparatus such as a 360° camera system (also known as an omnidirectional or spherical camera system). The content may be captured for provision to the user in near real-time or may be captured in advance and stored for an indeterminate duration on a streaming server 13. Also, as will be appreciated, in some instances, for example when the visual virtual reality content is computer generated, the content capture devices 11 may not form part of the system 10.

The content consumption device 12 is a device which a user can use to consume VR content. In other words, the content consumption device 12 is able to output video and/or audio corresponding to VR content to a user. The content consumption device 12 may, for example, be a head-mounted display (HMD).

The streaming server 13 is a server from which VR content can be obtained via one or more content streams. The one or more content streams may include streams of video and/or audio data. Data corresponding to VR content may be stored on the streaming server 13 and be available for delivery to the content consumption device 12.

The buffer 14 is a component of the system 10 which is configured to receive data corresponding to VR content from the streaming server 13 and temporarily store the data before transmitting it elsewhere.

The rendering module 15 is a part of the system 10 which is configured to receive data corresponding to VR content from the buffer 14, to decode the data and to render the VR content for consumption by a user, via the content consumption device 12. To this end, the rendering module may comprise one or more decoders (not shown). The rendering module 15 may be part of the content consumption device 12 or may be separate to the content consumption device 12.

The viewing direction tracking module 16 is configured to determine and track the user's viewing direction in the virtual environment corresponding to VR content being consumed by the user. The viewing direction tracking module 16 may, for example, determine and track a user's head position and/or gaze direction, if the user is using a HMD. Tracking of the viewing direction may be achieved by any appropriate means.

The signalling module 17 is configured to signal commands and/or requests to other parts of the system 10. For example, the signalling module 17 may signal commands and/or requests to the streaming server 13 in order to obtain VR content corresponding to a particular viewing direction determined by the viewing direction tracking module 16.

The prediction module 18 is configured to predict the viewing direction of the user at a time subsequent to a current time. Such prediction may be performed based on the physical behaviour of the user, which includes a current viewing direction (e.g. a current head position) and/or past changes in viewing direction (e.g. past head movement). In addition or alternatively, the prediction model may take into account characteristics of the VR content and/or what is currently being viewed by the user (e.g. VR content and/or the real world with super-imposed VR content). As such, the prediction module may take into account person of interest (POI) information, object of interest (OOI) information and/or region of interest (ROI) information. The information described above may be delivered to the prediction module 18 (e.g. by the streaming server 13) in a prioritised order. The prioritized order may define the importance of various OOI/POI/ROI to be reproduced with better quality. For example, OOI/POI/ROI of higher importance may be delivered before OOI/POI/ROI of lower importance.

The content generation module 19 is configured to generate (or synthesise) visual VR content. This generated (or synthesised) VR content may be delivered to the user in addition to VR content received from the streaming server 13, or instead of at least part of the VR content received from the streaming server 13.

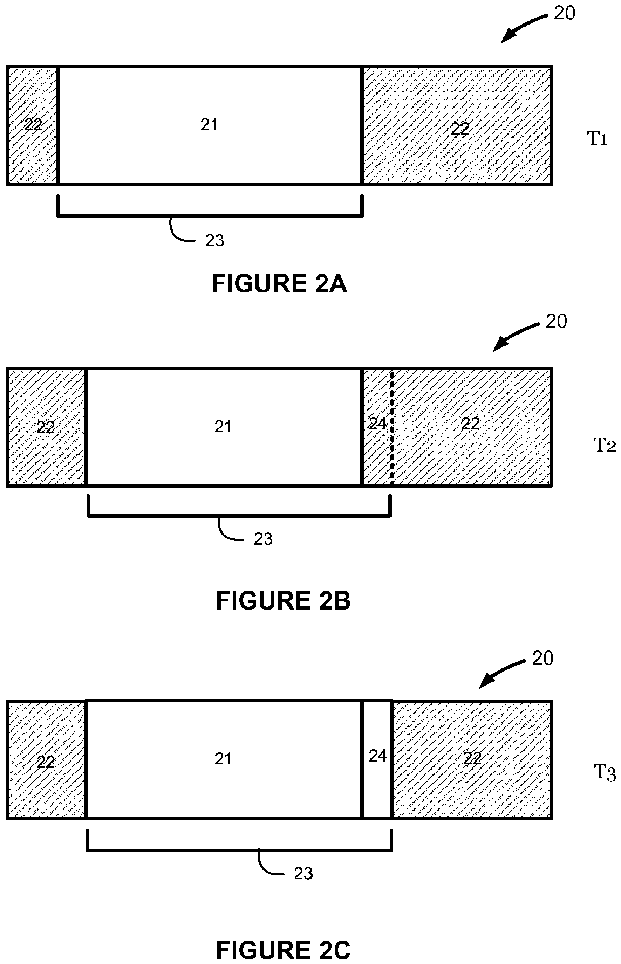

Various methods and functions which may be performed by various parts of the system 10 will now be described with reference to Figures 2A to 2C.

Figure 2A illustrates the delivery of visual VR content 20 to a user at a first moment in time (T₁). The visual VR content 20 comprises a first portion of visual VR content corresponding to a first region 21 of VR content and a second portion of visual VR content corresponding to a second region 22 of VR content. The first and second regions 21, 22 may be regions corresponding to different viewing directions in a virtual environment. In some examples, the first and second regions 21, 22 may neighbour, or be (directly) adjacent to, each other (as illustrated). The region currently being viewed by the user may be referred to as the viewport 23 of the user.

As illustrated, at time T₁, the viewport 23 of the user corresponds to the first region 21, and the first portion of visual VR content is being displayed to the user. At the same time, outside of the viewport 23 of the user, the second portion of visual VR content (which corresponds to the second region 22) is not being displayed to the user.

In general, it is desirable that the visual VR content displayed to the user is of a high quality and therefore, at time T₁, the first portion of visual VR content may be visual VR content which has a high quality (a first quality). In addition, it is also generally desirable to reduce bandwidth usage when streaming VR content. One way of doing this is to stream portions of visual VR content which are not being displayed to the user at a lower quality. Therefore, at time T₁, because the second portion of visual VR content is not being displayed to the user, the second portion may have a low quality (a second quality) which is lower than the quality of the first portion. This may free up bandwidth and so the first portion can be streamed at a quality which is higher than would be possible if both the first and second portions were streamed at the same quality. In some examples, the second portion of visual VR content may be modified to emphasize visual aspects of one or more OOI/POI/ROI. For example, the edges of an OOI/POI/ROI may be blurred or enhanced as a pre-processing step.

In the context of this specification, "quality" may comprise one or more of the following characteristics which represent the quality of visual VR content: resolution, bit depth, frame rate and bit rate.

Figure 2B illustrates the delivery of visual VR content 20 to the user at a second moment in time (T₂). In the time interval between time T₁ and time T₂, the viewport 23 of the user has moved so that at least part 24 of the second region 22 is within the viewport 23. This movement of the viewport 23 may occur in response to a determination (e.g. by the viewing direction tracking module 16) that the user's viewing direction has changed (e.g. if the user has turned their head while wearing a HMD). Therefore, in this situation, a portion of visual VR content which corresponds to the part 24 of the second region 22 needs to be displayed in the part 24 of the second region 22. However, since VR content streaming suffers from delays, high quality visual VR content (e.g. of the same or similar quality to the first portion) may not be available at time T₂ (e.g. because the necessary data has not yet arrived from the streaming server 13). This may occur, for example, if the viewing direction of the user changes rapidly (e.g. if the user moves their head quickly).

In a conventional example of visual VR content delivery, a part of the second portion of visual VR content (which is low quality visual VR content) corresponding to the part 24 of the second region 22 may be displayed, since this is available at time T₂. As such, the user is still provided with the appropriate visual VR content for the part 24 of the second region 22 at time T₂, albeit at a lower quality compared the quality of the first portion 21 of visual VR content. However, this approach means that part of the viewport 23 of the user is displaying low quality visual VR content at time T₂, which is detrimental to the immersive VR experience of the user.

The VR content delivery system described herein may improve upon the above-described example. Specifically, the system 10 may be configured such that a third portion of visual VR content, which corresponds to the part 24 of the second region 22, is generated by a neural network. This third portion of visual VR content may then be displayed at time T₂ (instead of the low quality part of the second portion mentioned above). This third portion of visual VR content may have a third quality which is higher than the quality of the second portion of visual VR content. As such, the user may be provided with higher quality visual VR content in the part 24 of the second region 22 compared to the conventional example above, thereby providing the user with an improved immersive experience at time T₂ compared to the conventional example.

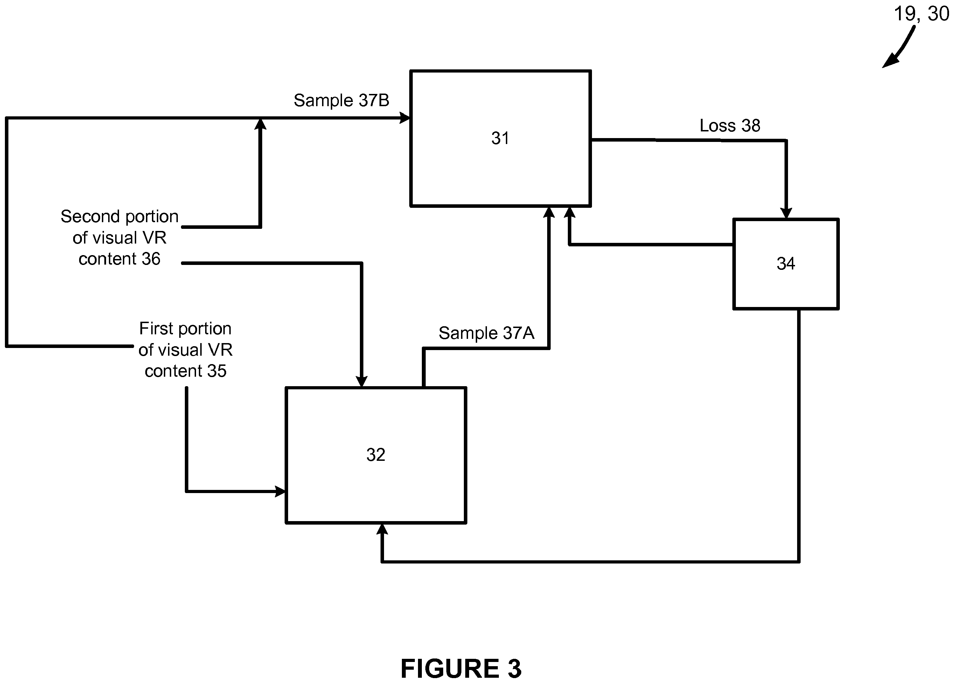

The third portion may be generated based on the first portion and/or the second portion. In some examples, the third portion may be generated based on the second portion (low quality content) corresponding to time T₂ and the first portion (high quality content) corresponding to time T₁ (e.g. if the viewport 23 of the user has moved fully into the second region 22 at time T₂ and so no high quality content for the region corresponding to the viewport is available at T₂). In other examples, the third portion may be generated based on the first portion corresponding to time T₂ and the second portion corresponding to time T₂ (e.g. if the viewport of the user has only partially moved into the second region 22 at time T₂ and so at least some high quality content for the region corresponding to the viewport is available at time T₂). If the second portion of visual VR content has been modified to have certain visual effects (e.g. the edges of an OOI/ROI/POI have been blurred or enhanced as described above), a third portion generated based on the second portion may have corresponding visual effects. In some examples, the third portion may be generated on only the first portion or only the second portion. The generation of the third portion by a neural network will be described in more detail below with reference to Figure 3.

In addition to displaying the third portion of visual VR content, a request may be made for a fourth portion of visual VR content (e.g. by the signalling module 17). The fourth portion corresponds to the same sub-region 24 (part 24 of the second region 22) as the third portion. Put another away, the fourth portion represents the same region of the virtual environment as does the third portion. Also, the fourth portion may have the same quality as the first quality. In other words, the fourth portion may be high quality content similar to the first portion which is available from the streaming server 13.

It will be appreciated that, if data corresponding to high quality visual VR content is already available (e.g. if the viewing direction changes slowly), then the high quality visual VR content may be used at time T₂, without using either the generated third portion or the part of the low quality second portion as described above. Accordingly, the content generation module 19 may be configured to generate the third portion only if a change of viewing direction exceeds a spatial threshold, for example an angular speed threshold or an angular rotation threshold. The content generation module 19 may be configured to generate the third portion in response to receipt of a request from the signalling module 17.

In order to ensure that the generated third portion is available for display with little or no delay after the viewport 23 of the user moves, a prediction of the viewing direction at time T2 may be made prior to time T₂ by the prediction module 18. The prediction may be based on one or more of the following: the viewing direction prior to time T₂ (e.g. the head position at time T₁), the change in viewing direction prior to time T₂ (e.g. head movement prior to T₂), an identified person of interest (POI) in the VR content, an identified region of interest (ROI) in the VR content, and an identified object of interest (OOI) in the VR content. In this way, the third portion may be generated based on the predicted viewing direction. As such, if the viewing direction changes to be the predicted viewing direction, the generated third portion is already available for display.

The spatial extent of the third portion of visual VR content that is generated by content generation module 19 may be larger than that of the part of the second region that would be displayed if the viewing direction changes to the predicted viewing direction. In this case, a part of the generated third portion may then be selected, (for example by the rendering module 15), to be displayed at time T2 based on the actual viewing direction at time T2.

As will be appreciated, in the display of visual VR content, the full field of view of the VR environment may be split into a number of "tiles" which each correspond to a different field of view. The tile size used (size of the field of view of a tile) may depend on the number of decoder instances that are used (e.g. by the rendering module 15). For example, if four decoder instances are used, four tiles which each correspond to a 90° field of view may be used (if the full field of view covers 360° and is split evenly between the decoders). It will be understood from the above description that each decoder may be configured to decode content corresponding to one tile. Thus, using more decoders may allow the use of a smaller tile size compared to using fewer decoders, if the full field of view is split evenly between the decoders used.

In the system 10 described herein, the third portion of visual VR content may be generated as an integer number of tiles. Since a smaller tile is easier to generate than a larger tile, it may be desirable to use a larger number of smaller tiles (rather than a smaller number of larger tiles) so that it is easier to generate the third portion. For example, generation of a tile size corresponding to 540x1080 pixels may be easier than generation of a tile size corresponding to 1080x1080 pixels. Since each decoder is configured to decode content corresponding to one tile, the use of a larger number of decoders may allow the use of a larger number of smaller tiles. Therefore, in the system 10 described herein, the size of the third portion may be predetermined based on the number of decoders utilised (since the third portion is generated as an integer number of tiles). In this way, the system 10 may be able to perform better in its generation of the third portion if more decoders are used (compared to if fewer decoders are used), since more decoders allows the use of smaller tile sizes as described above.
In some examples, the size of the third portion may be controlled based on the round-trip time (RTT) for requesting the fourth portion from the streaming server 13. For example, the streaming server 13 may signal the sizes for the third portion which are available and an appropriate size may be selected based on the number of decoders which can be simultaneously executed by the rendering module 15. For example, if the rendering module 15 has two decoders which can be simultaneously executed, a 180° size may be chosen. Similarly, if the rendering module 15 has eight decoders which can be simultaneously executed, a 45° size may be selected.

In some examples, the duration of the third portion of visual VR content (i.e. the temporal length of the video) may be controlled based on the RTT for requesting the fourth portion from the streaming server 13. For example, a third portion corresponding to a longer duration may be required for a higher RTT, since the fourth portion may take longer to arrive (e.g. from the streaming server 13).

In some examples, the spatial size of the third portion may be controlled based on the user's interactive feedback and/or information indicating the difference in quality between the third quality and the first quality (e.g. by using a measure of the difference in peak signal to noise ratio of the content having the first quality and the content having the third quality). For example, a smaller size for the third portion can be used if an additional decoder is activated.

Figure 2C illustrates the delivery of visual VR content 20 at a third moment in time (T₃). At time T₃, the data necessary to provide high quality (the first quality) visual VR content in the part 24 of the second region 22 has now arrived and therefore the entire viewport 23 can now be provided with high quality visual VR content. In other words, at T₃, the fourth portion of visual VR content has arrived and thus can be used. It will be appreciated that this switch to the first quality may be desirable for both of the examples described above because both the second quality and the third quality may be lower than the first quality.

In some examples, the request for the fourth portion of visual VR content described above may only occur if the change in viewing direction is above a temporal threshold (e.g. if the head moves and stays in a new position for a long enough amount of time) and/or a spatial threshold (e.g. if a large enough head movement occurs). This may reduce the chances of unnecessarily requesting VR content which is not needed.

In some examples, the above described temporal and/or spatial thresholds may be dependent on user feedback. For example, user feedback may be used to determine whether the generated VR content (the third portion) is considered to be good by the user. If the generated VR content is determined to be good, the temporal threshold for requesting high quality content from the streaming server 13 may be made larger (since the quality of the third portion is acceptable and so it is less important to request the high quality content). If the generated VR content is determined to be bad by the user, the spatial size of the third portion may be reduced so that the quality of the generated third portion may be improved. In addition or alternatively, the temporal threshold for requesting high quality content from the streaming server 13 may be reduced (since the spatial extent of the third portion is smaller, so it is more important to request the high quality content).

Figure 3 illustrates an example configuration of at least a part of the content generation module 19 of Figure 1. The content generation module 19 may comprise a Generative Adversarial Network (GAN) 30 which is configured to generate visual VR content. For example, the GAN 30 may generate the third portion of visual VR content based on the first and/or second portions of visual VR content. GANs are known and will not be described here in much detail. However, an example of an arrangement and operation of the GAN 30 for improving the quality of the second region 22 displayed to the user will now be described with reference to Figures 2A-2C and Figure 3.

The GAN 30 may comprise a generator 32 and a discriminator 31. The generator 31 may receive the first portion of visual VR content 35 and the part of the second portion of visual VR content 36 which corresponds to the part 24 of the second region 22. Using the received portions of VR content as inputs, the generator 32 may generate (based on the received portions) a sample 37a as an output. This sample 37a is a sample of visual VR content and may be used as the third portion of visual VR content as described above (e.g. by transmitting the sample to be rendered by the rendering module 15).

In some examples, generator 31 may receive only the first portion of visual VR content 35 or only the second portion of visual VR content 36. However, providing both the first and second portions of visual VR content to the generator 35 may improve the quality of the generated sample 37A (which may be used as the third portion).

In some examples, the first portion of visual VR content 35 may correspond to a first time instant and the second portion of visual VR content 36 may correspond to a second time instant, the first time instant being prior to the second time instant (e.g. T₁ and T₂ as described above with reference to Figures 2A-2C).

In some examples, both the first and second portions of visual VR content may correspond to the same time instant (e.g. T₂ as described above with reference to Figures 2A-2C). This may be beneficial, for example, when viewport of the user has only partially moved into the second region 22 as illustrated in Figure 2B. In this case, in some examples the generator may also take as an input one or more video frames corresponding to one or more previous time instants (e.g. T₁), thereby to take into account temporal correlation of the first and second portions.

The sample 37a generated by the generator may also be provided to the discriminator 31. The discriminator 31 may also receive another sample 37b which is based on the first portion of visual VR content 35 and/or the second portion of visual VR content 36. The other sample 37b may include a modified version of the first and/or second portions of visual VR content 35, 36 such as content modified to emphasise or de-emphasise certain aspects of the content (e.g. an OOI, ROI, POI or a certain colour). Based on the above described samples 37a, 37b, the discriminator 31 may output a loss 38 (e.g. calculated using a loss function which may be based on the difference between generated content and ground truth content) which is back-propagated to the discriminator 31 and the generator 32 via a switch 34. This back-propagation can then be used to adjust the discriminator 31 and/or generator 32 so as to improve the discriminator 31 and/or the generator 32. Therefore, the GAN may be trained based on the generated visual VR content (e.g. the third portion). This improvement process may run concurrently with the provision of the visual VR content described herein.

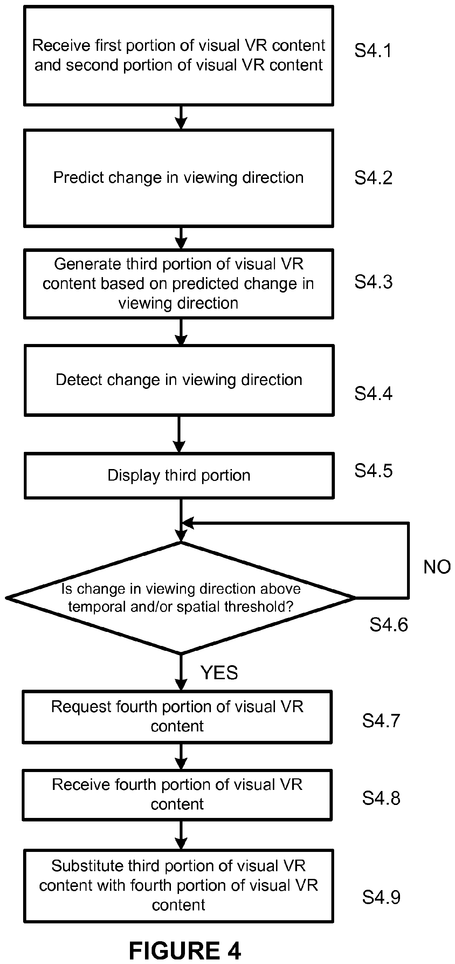

Figure 4 is a flowchart showing examples of various operations which may be performed by parts of the system 10 of Figure 1.

At operation S4.1, a first portion of visual VR content and a second portion of visual VR content is received. The first portion has a higher quality than the second portion.

At operation S4.2, a change in viewing direction of the user is predicted.

At operation S4.3, a third portion of visual VR content is generated based on the predicted change in viewing direction. The third portion has a higher quality than the second portion. The generation may be performed by a neural network such as the GAN 30 described with reference to Figure 3.

At operation S4.4, a change in viewing direction in accordance with the prediction is detected.

At operation S4.5, the third portion is displayed.

At operation S4.6 it is determined whether the detected change in viewing direction is above a temporal and/or spatial threshold. If a positive determination is reached (i.e. a determination that the temporal and/or spatial threshold has been exceeded), then the method proceeds to operation 4.7. If a negative determination is reached (i.e. a determination that the temporal and/or spatial threshold has not been exceeded), the method returns to monitoring whether the change in viewing direction is above a temporal and/or spatial threshold. The threshold may be determined and/or modified as described above with reference to Figures 2A to 2C.

At operation S4.7, a fourth portion of visual VR content is requested. The fourth portion may have the same quality as the first portion.

At operation S4.8, the fourth portion of visual VR content is received.

At operation S4.9, the display of the third portion of visual VR content is substituted with the display of the fourth portion of visual VR content.

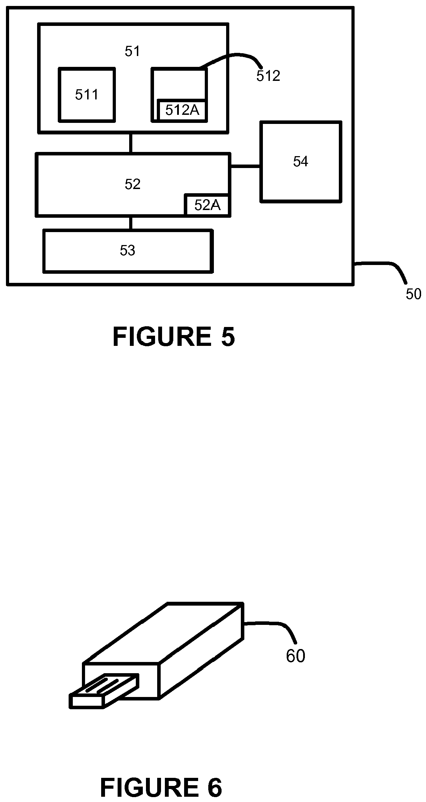

Figure 5 is a schematic block diagram of an example configuration of computing apparatus 50, which may be configured to perform any one of or any combination of the operations described herein. For example, the computing apparatus 50 may perform any one of or any combination of the functions of the buffer 14, the rendering module 15, the viewing direction tracking module 16, the signalling module 17, the prediction module 18 and the content generation module 19. The computing apparatus 50 may comprise memory 51, processing circuitry 52, an input 53, and an output 54. The structural elements of Figure 5 represent examples of means for performing any one of or any combination of the operations described herein. For example, computing apparatus 50 may comprise means for performing one or more steps of the methods as described in the claims and throughout the specification.

The processing circuitry 52 may be of any suitable composition and may include one or more processors 52A of any suitable type or suitable combination of types. For example, the processing circuitry 52 may be a programmable processor that interprets computer program instructions and processes data. The processing circuitry 52 may include plural programmable processors. Alternatively, the processing circuitry 52 may be, for example, programmable hardware with embedded firmware. The processing circuitry 52 may be termed processing means. The processing circuitry 52 may alternatively or additionally include one or more Application Specific Integrated Circuits (ASICs). In some instances, processing circuitry 52 may be referred to as computing apparatus.

The processing circuitry 52 described with reference to Figure 5 may be coupled to the memory 51 (or one or more storage devices) and may be operable to read/write data to/from the memory. The memory 51 may store thereon computer readable instructions 512A which, when executed by the processing circuitry 52, may cause any one of or any combination of the operations described herein to be performed. The memory 51 may comprise a single memory unit or a plurality of memory units upon which the computer-readable instructions (or code) 512A is stored. For example, the memory 51 may comprise both volatile memory 511 and non-volatile memory 512. For example, the computer readable instructions 512A may be stored in the non-volatile memory 512 and may be executed by the processing circuitry 52 using the volatile memory 511 for temporary storage of data or data and instructions. Examples of volatile memory include RAM, DRAM, and SDRAM etc. Examples of non-volatile memory include ROM, PROM, EEPROM, flash memory, optical storage, magnetic storage, etc. The memories 51 in general may be referred to as non-transitory computer readable memory media.

The input and output 52, 53 may be configured to receive and transmit signals in order to perform one or more of the operations described herein.

Figure 6 illustrates an example of a computer-readable medium 60 with computer-readable instructions (code) stored thereon. The computer-readable instructions (code), when executed by a processor, may cause any one of or any combination of the operations described above to be performed.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any media or means that can contain, store, communicate, propagate or transport the instructions for use by or in connection with an instruction execution system, apparatus, or device, such as a computer.

Reference to, where relevant, "computer-readable storage medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices and other devices. References to computer program, instructions, code etc. should be understood to express software for a programmable processor firmware such as the programmable content of a hardware device as instructions for a processor or configured or configuration settings for a fixed function device, gate array, programmable logic device, etc.

As used in this application, the term "circuitry" refers to all of the following: (a) hardware-only circuit implementations (such as implementations in only analogue and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a server, to perform various functions) and (c) to circuits, such as a microprocessor(s) or a portion of a microprocessor(s), that require software or firmware for operation, even if the software or firmware is not physically present.

If desired, the different functions discussed herein may be performed in a different order and/or concurrently with each other. Furthermore, if desired, one or more of the above-described functions may be optional or may be combined. Similarly, it will also be appreciated that the flow diagram of Figure 4 is an example only and that various operations depicted therein may be omitted, reordered and/or combined.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

## Claims

1. A method comprising:
causing receipt of visual virtual reality content comprising a first portion for display as a first region of the virtual reality content and a second portion corresponding to a second region of the virtual reality content, wherein the first portion has a first quality and the second portion has a second quality lower than the first quality; and
causing generation of a third portion of the visual virtual reality content for display as at least part of the second region of the virtual reality content, wherein the third portion is generated by a neural network based on the first portion and/or the second portion.

2. The method of claim 1, wherein the third portion of the virtual reality content has a third quality higher than the second quality.

3. Apparatus comprising:
means for causing receipt of visual virtual reality content comprising a first portion for display as a first region of the virtual reality content and a second portion corresponding to a second region of the virtual reality content, wherein the first portion has a first quality and the second portion has a second quality lower than the first quality; and
means for causing generation of a third portion of the visual virtual reality content for display as at least part of the second region of the virtual reality content, wherein the third portion is generated by a neural network based on the first portion and/or the second portion.

4. The apparatus of claim 3, wherein the third portion of the virtual reality content has a third quality higher than the second quality.

5. The apparatus of claim 3 or 4, further comprising:
means for predicting a change in viewing direction of a user, wherein the generation of the third portion is based on the predicted change in the viewing direction.

6. The apparatus of any one of claims 3 to 5, further comprising:
means for causing, in response to detection of a change in viewing direction of a user viewing the virtual reality content, display of the third portion of the visual virtual reality content as the at least part of the second region of the virtual reality content.

7. The apparatus of any one of claims 3 to 6, further comprising:
means for requesting, in response to a detection of a change in viewing direction of a user viewing the virtual reality content, a fourth portion of the visual virtual reality content for display as the at least part of the second region of the virtual reality content, wherein the fourth portion has a fourth quality higher than the third quality.

8. The apparatus of claim 7, further comprising:
means for receiving the fourth portion of the visual virtual reality content; and
means for causing, in response to the receipt of the fourth portion, display of the fourth portion as the at least part of the second region of the virtual reality content.

9. The apparatus of claim 7 or 8, wherein the fourth quality is the same quality as the first quality.

10. The apparatus of any one of claims 3 to 9, wherein the first region neighbours the second region.

11. The apparatus of any one of claims 3 to 10, wherein the quality of the visual virtual reality content comprises at least one of:
resolution;
bit depth;
bit rate; and
frame rate.

12. The apparatus of any one of claims 3 to 11, wherein size of the third portion is determined based on one or more of the following:
user feedback;
a measure of difference in quality between the first quality and the third quality;
tile size;
number of decoders.

13. The apparatus of any one claims 3 to 12, wherein the neural network is a Generative Adversarial Network.

14. The apparatus of claim 13, wherein the Generative Adversarial Network is trained based on the third portion of the visual virtual reality content.

15. A computer-readable medium having computer-readable code stored thereon, the computer readable code, when executed by at least one processor, causes performance of:
causing receipt of visual virtual reality content comprising a first portion for display as a first region of the virtual reality content and a second portion corresponding to a second region of the virtual reality content, wherein the first portion has a first quality and the second portion has a second quality lower than the first quality; and
causing generation of a third portion of the visual virtual reality content for display as at least part of the second region of the virtual reality content, wherein the third portion is generated by a neural network based on the first portion and/or the second portion.
